# EUROPEAN PATENT SPECIFICATION

(11) **EP 4 356 043 B1**
(45) Date of publication and mention of the grant of the patent: **08.04.2026**
(21) Application number: 22721913.6
(22) Date of filing: 03.05.2022
(51) Int. Cl.: F22B 37/26, F22B 37/28, B01D 45/06

(54) **STEAM SEPARATOR**
DAMPFABSCHEIDER
SÉPARATEUR DE VAPEUR

(30) Priority: 15.06.2021 SE 2150770
(43) Date of publication of application: 24.04.2024
(73) Proprietor: Valmet AB, 851 94 Sundsvall (SE)
(72) Inventor: SCHEDIN, Jens, 852 40 Sundsvall (SE); JOHANSSON, Mattias, 865 33 Alnö (SE); LUNDBERG, Jörgen, 755 98 Uppsala (SE); LUNDBERG, Jonas, 855 91 Sundsvall (SE); WALLIN, Per, 865 32 Alnö (SE); PETTERSSON, Patrik, 865 32 Alnö (SE); FRANZÉN, Jonas, 865 33 Alnö (SE)
(74) Representative: Novagraaf Group
(86) International application number: PCT/SE2022/050426
(87) International publication number: WO 2022/265555

(56) References cited:
- EP-A1- 0 158 891
- FR-A- 961 953
- US-A- 4 803 841
- US-A- 4 811 566

## Description

### TECHNICAL FIELD

The present invention relates generally to a steam separator used in the production of pulp from cellulosic material, and more particularly to a steam separator by which steam can be separated from a flow of fluid and cellulosic fibers.

### BACKGROUND

In the area of pulp production there is sometimes a need to remove fluid, e.g. in the form of steam, from a flow comprising fluid and cellulosic material, e.g. in the form of wood chips or wood fibers, which flow travels in a flow tube, such as a blow line. Such fluid or steam removal can, for example, be done prior to a drying step, such that a more efficient drying of the cellulosic material can be achieved. Since pressure is needed to maintain a sufficient flow velocity in the flow tube, there is, however, important that any separation arrangement provided in the flow line does not involve a too large pressure drop. EP 0 158 891 A1, FR 961 953 A, US 4 811 566 A and US 4 803 841 A show related prior art documenst.

An object of the present invention is therefore to provide a steam separator which does not create a pressure drop, or which only creates a minimum of pressure drop. Another object of the invention is to provide a steam separator which is cheap and easy to maintain. A still further object is to provide a steam separator which is easy to install in an existing production line without any (or only minimal) negative influence on the production capacity.

### SUMMARY OF THE INVENTION

The above-mentioned objects are achieved with a steam separator comprising a first flow tube, a second flow tube and at least one steam transport pipe according to the independent claim. Preferred embodiments are set forth in the dependent claims.

The invention relates to a steam separator for separating steam from a flow of fluid and cellulosic material, which steam separator comprises: a first flow pipe, which comprises a first end, a second end and a wall having an outer circumference, which has a first diameter; a second flow pipe, which comprises a first end, a second end and a wall with an inner circumference, which, in at least a first length portion, has a second diameter, which is larger than the first diameter; and at least one steam transport tube, each of which having a steam entrance opening, which is arranged as a through-hole through the wall of the second flow pipe, wherein the first flow pipe is inserted a distance into the first length portion of the second flow pipe such that the second end of the first flow pipe is located downstream of the first end of the second flow pipe and wherein said at least one steam entrance opening is arranged within said distance.

By this arrangement, since the second diameter is larger than the first diameter at least in said length portion, there is a gap provided between the outer circumference of the first flow pipe and the inner circumference of the second flow pipe in said length portion, in which gap steam can flow a distance in an upstream direction (i.e. towards the first end of the second flow tube) and into said at least one steam entrance opening for further transport in the at least one steam transport tube.

According to the invention there are more than one steam transport tube arranged, such as at least two steam transport tubes. These steam transport tubes are merged or joined together into a common steam manifold pipe, which can lead the separated steam to a suitable recipient device, such as a chip bin.

The entrance opening of at least one steam transport tube is arranged with an angle to the general extension direction of the steam manifold pipe, which angle is between 90 and 180 degrees. This arrangement ensures that there is no dead zone(s) created, which could be the case if one entrance opening would be located more or less in line with (i.e. with an angle of about zero degree) the general extension direction of the steam manifold pipe. This entrance opening would then constitute the easiest way for the steam to escape out of the second flow pipe, and other entrance openings would consequently collect steam less efficiently.

The invention is based on the principle that steam, which is contained in a mixture of fluid and cellulosic materials that flows in a pipe, expands more quickly when this flow mixture leaves a first pipe with one diameter and enters a second pipe with a larger diameter. That is, for a short while, when the flow just enters the second pipe, the outer periphery of the flow consists mainly of steam. Then, if the first pipe has been inserted a distance into the second pipe and there is a gap provided between the outer circumference of the first pipe and the inner circumference of the second pipe, a portion of this "outer-periphery" steam may travel backwards in the gap and can be led away, i.e. separated from the main flow. Tests have shown that this separating effect can be enhanced if there is a throttling provided at inner circumference of the first flow pipe, and such a throttling is arranged in one embodiment of the invention. Preferably the throttling is located at or near the end of the first flow pipe.

### BRIEF DESCRIPTION OF THE DRAWINGS

The present invention will be further explained hereinafter by means of non-limiting examples and with reference to the appended drawings, wherein:
Fig. 1 is a schematic illustration of a steam separator according to a first embodiment of the present invention;
Fig. 2 is a schematic illustration of the steam separator of Fig. 1 seen in a transversal cross-section;
Fig. 3 is a schematic illustration of the steam separator of Fig. 1 seen in a longitudinal cross-section; and
Fig. 4 is a schematic illustration of a steam separator according to a second embodiment of the invention seen in a longitudinal cross-section.

### DETAILED DESCRIPTION OF PREFERRED EMBODIMENTS

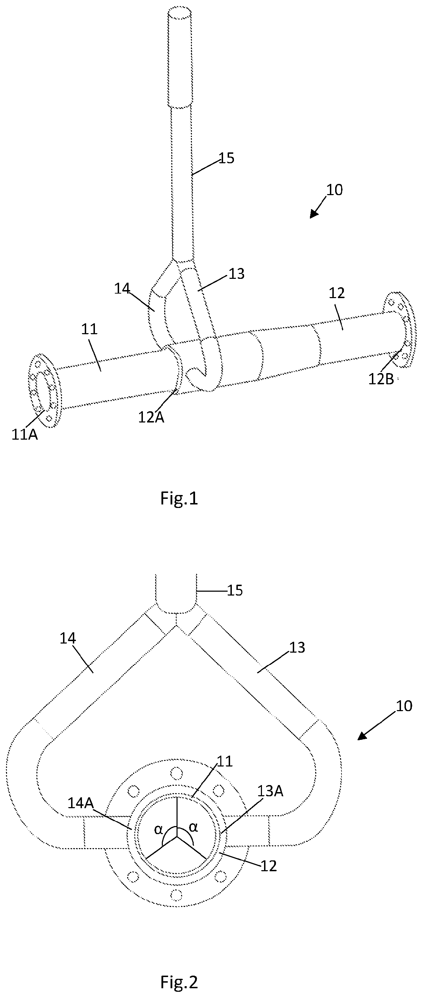

Fig. 1 illustrates schematically a first embodiment of steam separator 10 according to the invention. The steam separator 10 comprises a first flow pipe 11, which has a first end 11A and a second end 11B (which is not visible in Fig. 1), a second flow pipe 12, which has a first end 12A (which is not visible in Fig. 1) and a second end 12B, and at least one steam transport tube. In the embodiment shown in Fig. 1, there are two steam transport tubes (13, **14) provided,** but there can be more steam transport tubes arranged, such as three, four, five or more steam transport tubes. It also possible to provide only one steam transport tube. If there are more than one steam transport tube, it can be convenient to let the steam transport tubes merge into one common steam transport pipe. In Fig. 1, the two steam transport tubes (13, 14) are joined or merged together into a common pipe 15, which herein is denoted a steam manifold pipe 15. The steam manifold pipe 15 can be connected to a device, e.g. a chip bin, in which the steam is used for, e.g., heating and/or impregnation. The latter is, however, outside the scope of the present invention.

For all embodiments of the invention, the general flow direction for the mixture of fluid and cellulosic material is from the first flow pipe and into the second flow pipe. Thus, in Fig. 1, the flow enters the first flow pipe 11 at the first end 11A and leaves the first flow pipe 11 at the second end 11B (which is not visible in Fig. 1). The flow then enters the second flow pipe 12; but - due the particular configuration of the present invention - the flow enters the interior of the second flow pipe 12 not exactly at the first end 12A thereof, but at a distance from the first end 12A, as will be thoroughly described below. The main flow (i.e. with some steam removed) then leaves the second flow pipe 12 at the second end 12B.

In Fig. 2, the steam separator 10 is illustrated in a transversal cross-section showing the arrangements of (in this embodiment) the two steam transport tubes (13, 14) with their entrance openings (13A, 13B). It can in particular be noted that the entrance openings are provided with an angle α to the general extension of the steam manifold pipe 15, which angle α in this example is 90°. As was explained above, it is preferred that 90° ≤ α ≤ 180°. Thus, if for instance a third steam transport tube were provided, this third steam transport tube could have an entrance opening located directly below the extension of the steam manifold pipe, i.e. at an angle α = 180°.

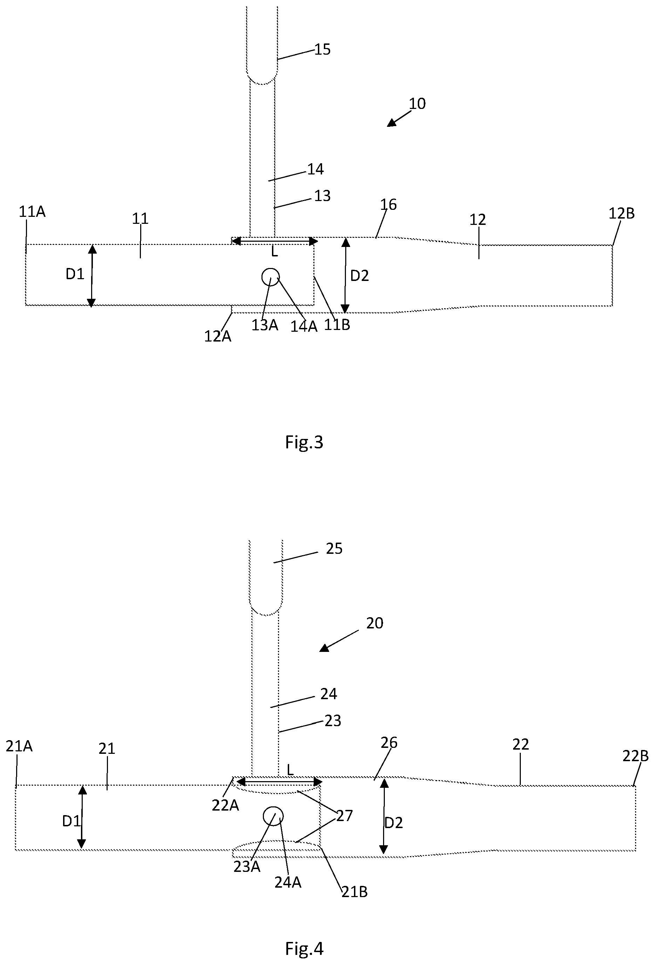

Fig. 3 illustrates schematically the steam separator 10 in a longitudinal cross-section and shows how the first flow pipe 11 is arranged in relation to the second flow pipe 12; and it can in particular be seen that the second end 11B of the first flow pipe 11 is located a distance L into the second flow pipe 12, i.e. the first end 11B of the first flow pipe 11 is positioned at a distance L from the first end 12A of the second flow pipe 12. It can further be noted that the entrance opening 13A of the first steam transport tube 13 and the entrance opening 14A of the second steam transport tube 14 are located relatively close to the second end 11B of the first flow pipe 11, such that the entrance opening 13A of the first steam transport tube 13 and the entrance opening 14A of the second steam transport tube 14 are arranged within this distance L. The entrance openings 13A, 14A are both arranged as through-holes through the wall of the second flow pipe 12.

To accomplish the feature that the first flow pipe 11 is inserted a length L into the second flow pipe 12, an outer diameter D1 of the first flow pipe 11 - or, more correctly, an outer diameter D1 of the wall of the first flow pipe 11 - needs to be smaller than an inner diameter D2 of the second flow pipe 12 - or, more correctly, an outer diameter D2 of the wall of the second flow pipe 12, as is illustrated in Fig. 3. However, as is also shown in Fig. 3, the second flow pipe 12 does not need to have this diameter D2 throughout its whole length, instead the second flow pipe 12 can have the enlarged diameter D2 in only a first length portion 16, which extends from the first end 12A of the second flow pipe 12 towards the second end 12B thereof. It is, however, important that the first length portion 16 is encompasses the above-mentioned distance L, with which the first flow pipe 11 is inserted into the second flow pipe 12. In other words, the first length portion 16 is longer than the distance L. To provide an enlarged diameter D2 in only a first length portion 16 of the second flow pipe 12 allows that the second flow pipe 12 can have smaller diameter at the second end 12B. The diameter of the second flow pipe 12 at its second end 12B can preferably be the same as the diameter of the first flow pipe 11 at its first end 11A, since such an arrangement facilities mounting of the steam separator 12 in an existing piping, e.g. a blow line, which typically can have the same diameter.

When the steam separator 10 is in operation, the flow, which is a mixture of fiber material, e.g. cellulosic material, and fluid, which consists of or comprises steam, enters the first flow pipe 11 via the first end 11A and leaves the first flow pipe 11 at the second end 11B and enters the second flow pipe 12 at a position located the distance L from the first end 12A of the second flow pipe 12. At this position, which is located within the first length portion 16 of the second flow pipe, the inner diameter D2 of the wall of the second flow pipe 12 is larger than the outer diameter D1 of the first flow pipe 11, which means that the flow can expand radially, and since steam is lighter it will expand quicker than the rest of the flow. Thus, a certain distance outside the second end 11B of the first flow pipe 11, an outer periphery of the flow comprises mainly steam, which can travel backwards, i.e. towards the entrance openings 13A, 14A of the steam transporting tubes 13, 14, in the gap provided within the first length portion 16. The steam then enters the entrance openings 13A, 14A and flows further in the steam transporting tubes 13, 14, and further in the steam manifold pipe 15. A steam manifold pipe, such as steam manifold pipe 15, is, however, optional for all embodiments presented herein. For efficient steam collection, the steam should preferably not be allowed to escape the gap at the first end 12A of the second flow pipe 12. It is therefore preferred that the gap is closed at or near the first end 12A of the second flow pipe 12, which can be accomplished by, e.g., attaching a ring, e.g., by welding, in an air-tight fit between the wall of the first flow pipe 11 and the wall of the second flow pipe 12 at or near the first end 12A of the second flow pipe 12.

Fig. 4 illustrates schematically a second embodiment of steam separator 20 according to the invention. The steam separator 20 comprises a first flow pipe 21, which has a first end 21A and a second end 21B, a second flow pipe 22, which has a first end 22A and a second end 22B, and two steam transport tubes 23, 24. (In the view of Fig. 4, the steam transport tubes 23, 24 are seen as one steam transport tube.) The steam transport tube 23 has a steam entrance opening 23A, and the steam transport tube 24 has a steam entrance opening 24A. The stream transport tubes 23, 24 are joined or merged together into a common steam manifold pipe 25. From Fig. 4 it can further be seen that the first flow pipe 21 has been inserted a distance L into the second flow pipe 22 in a manner that has thoroughly been described above in conjunction with first embodiment illustrated in Figs. 1, 2 and 3. The first flow pipe 21 has a wall with an outer diameter D1 and the second flow pipe 22 comprises a length section 26 with a wall having an inner diameter D2. When the steam separator 20 is in use, all part of steam separator 20 operate and function is in the same way as corresponding parts of the steam separator 10 described in Figs. 1-3 and discussed above.

The difference between steam separator 10 and steam separator 20 is that steam separator 20 further comprises a throttling 27 provided at or near the second end 21B of the first flow pipe 21. The throttling 27 is located at an inner circumference of the first flow pipe 21 and reduces the diameter of the first flow pipe 21 at or near the second end 21B of the first flow pipe 21. Tests have revealed that this reduced diameter enhances the separation of steam and remaining flow when the flow leaves the first flow pipe 21 and enters the second flow pipe 22 at or near the second end 21B of the first flow pipe 21. This separation effect was described above in conjunction with the first embodiment of the present invention.

## Claims

1. A steam separator (10; 20) for separating steam from a flow of fluid and cellulosic material, comprising:
a first flow pipe (11; 21) comprising a first end (11A; 21A), a second end (11B; 21B) and a wall with an outer circumference, which has a first diameter (D1);
a second flow pipe (12; 22) comprising a first end (12A; 22A), a second end (12B; 22B) and a wall with an inner circumference, which, in at least a first length portion (16; 26), has a second diameter (D2), which is larger than the first diameter (D1), wherein the second flow pipe (12; 22) is arranged to receive said flow of fluid and cellulosic material from the first flow pipe (11; 21); and
at least two steam transport tubes (13, 14; 23, 24), each of which having a steam entrance opening (13A, 14A; 23A, 24A), which is arranged as a through-hole through the wall of the second flow pipe (12; 22),
**characterized in that** the first flow pipe (11; 21) is inserted a distance (L) into the first length portion of the second flow pipe (12; 22) such that the second end (11B; 21B) of the first flow pipe (11; 21) is located inside the second flow pipe (12; 22) at the distance (L) from the first end (12A; 22A) of the second flow pipe (12; 22), and said at least one steam entrance opening (13A, 14A; 23A, 24A) being arranged within said distance (L), whereby there is a gap provided between the outer circumference of the first flow pipe (11; 21) and the inner circumference of the second flow pipe (12; 22) in said first length portion (16; 26), wherein the at least two steam transport tubes (13, 14; 23, 24) are merged together into a common steam manifold pipe (15; 25), and said at least one steam entrance opening (13A, 14A; 23A, 24A) is arranged with angle α to an extension direction of the steam manifold pipe (15; 25), where 90° ≤ α ≤ 180°.

2. The steam separator (20) according to claim 1, **characterized in that** there is a throttling (27) provided at an inner circumference of the first flow pipe (22).

3. The steam separator (20) according to claim 2, **characterized in that** the throttling (27) is provide at or near the second end (21B) of the first flow pipe (21).

## Patentansprüche

1. Dampfabscheider (10; 20) zum Abscheiden von Dampf aus einer Strömung von Fluid und Cellulosematerial, umfassend:
ein erstes Strömungsrohr (11; 21), umfassend ein erstes Ende (11A; 21A), ein zweites Ende (11B; 21B) und eine Wand mit einem Außenumfang, das einen ersten Durchmesser (D1) aufweist;
ein zweites Strömungsrohr (12; 22), umfassend ein erstes Ende (12A; 22A), ein zweites Ende (12B; 22B) und eine Wand mit einem Innenumfang, das in mindestens einem ersten Längenabschnitt (16; 26) einen zweiten Durchmesser (D2) aufweist, der größer als der erste Durchmesser (D1) ist, wobei das zweite Strömungsrohr (12; 22) angeordnet ist, um die Strömung von Fluid und Cellulosematerial von dem ersten Strömungsrohr (11; 21) aufzunehmen; und
mindestens zwei Dampftransportröhren (13, 14; 23, 24), von denen jede eine Dampfeintrittsöffnung (13A, 14A; 23A, 24A) aufweist, die als ein Durchgangsloch durch die Wand des zweiten Strömungsrohrs (12; 22) angeordnet ist,
**dadurch gekennzeichnet, dass** das erste Strömungsrohr (11; 21) mit einem Abstand (L) in den ersten Längenabschnitt des zweiten Strömungsrohrs (12; 22) derart eingesetzt ist, dass das zweite Ende (11B; 21B) des ersten Strömungsrohrs (11; 21) im Inneren des zweiten Strömungsrohrs (12; 22) in dem Abstand (L) von dem ersten Ende (12A; 22A) des zweiten Strömungsrohrs (12; 22) positioniert ist, und die mindestens eine Dampfeintrittsöffnung (13A, 14A; 23A, 24A) innerhalb des Abstands (L) angeordnet ist, wodurch ein Spalt zwischen dem Außenumfang des ersten Strömungsrohrs (11; 21) und dem Innenumfang des zweiten Strömungsrohrs (12; 22) in dem ersten Längenabschnitt (16; 26) bereitgestellt wird, wobei die mindestens zwei Dampftransportröhren (13, 14; 23, 24) zu einem gemeinsamen Dampfverteilerrohr (15; 25) zusammengeführt sind und die mindestens eine Dampfeintrittsöffnung (13A, 14A; 23A, 24A) mit einem Winkel α zu einer Erstreckungsrichtung des Dampfverteilerrohrs (15; 25) angeordnet ist, wobei 90° ≤ α ≤ 180°.

2. Dampfabscheider (20) nach Anspruch 1, **dadurch gekennzeichnet, dass** eine Drosselung (27) an einem Innenumfang des ersten Strömungsrohrs (22) bereitgestellt wird.

3. Dampfabscheider (20) nach Anspruch 2, **dadurch gekennzeichnet, dass** die Drosselung (27) an oder nahe dem zweiten Ende (21B) des ersten Strömungsrohrs (21) bereitgestellt ist.

## Revendications

1. Séparateur de vapeur (10 ; 20) pour la séparation de la vapeur d'un écoulement de fluide et de matière cellulosique, comprenant :
un premier tuyau d'écoulement (11 ; 21) comprenant une première extrémité (11A ; 21A), une seconde extrémité (11B ; 21B) et une paroi avec une circonférence externe, qui a un premier diamètre (D1) ;
un second tuyau d'écoulement (12 ; 22) comprenant une première extrémité (12A ; 22A), une seconde extrémité (12B ; 22B) et une paroi avec une circonférence interne, qui, dans au moins une première partie de longueur (16 ; 26), a un second diamètre (D2), qui est plus grand que le premier diamètre (D1), dans lequel le second tuyau d'écoulement (12 ; 22) est agencé pour recevoir ledit écoulement de fluide et de matière cellulosique du premier tuyau d'écoulement (11 ; 21) ; et
au moins deux tubes de transport de vapeur (13, 14 ; 23, 24), chacun ayant une ouverture d'entrée de vapeur (13A, 14A ; 23A, 24A), qui est agencée sous la forme d'un trou traversant à travers la paroi du second tuyau d'écoulement (12 ; 22),
**caractérisé en ce que** le premier tuyau d'écoulement (11 ; 21) est inséré sur une distance (L) dans la première partie de longueur du second tuyau d'écoulement (12 ; 22), de telle sorte que la seconde extrémité (11B ; 21B) du premier tuyau d'écoulement (11 ; 21) soit située à l'intérieur du second tuyau d'écoulement (12 ; 22) à la distance (L) de la première extrémité (12A ; 22A) du second tuyau d'écoulement (12 ; 22), et ladite au moins une ouverture d'entrée de vapeur (13A, 14A ; 23A, 24A) étant agencée à l'intérieur de ladite distance (L), moyennant quoi un espace est prévu entre la circonférence externe du premier tuyau d'écoulement (11 ; 21) et la circonférence interne du second tuyau d'écoulement (12 ; 22) dans ladite première partie de longueur (16 ; 26), dans lequel les au moins deux tubes de transport de vapeur (13, 14 ; 23, 24) sont réunis en un tuyau collecteur de vapeur commun (15 ; 25), et ladite au moins une ouverture d'entrée de vapeur (13A, 14A ; 23A, 24A) est agencée selon un angle α par rapport à une direction d'extension du tuyau collecteur de vapeur (15 ; 25), où 90° ≤ α ≤ 180°.

2. Séparateur de vapeur (20) selon la revendication 1, **caractérisé en ce qu'**un étranglement (27) est prévu au niveau d'une circonférence interne du premier tuyau d'écoulement (22).

3. Séparateur de vapeur (20) selon la revendication 2,
**caractérisé en ce que** l'étranglement (27) est prévu au niveau ou à proximité de la seconde extrémité (21B) du premier tuyau d'écoulement (21).
